# EUROPÄISCHE PATENTANMELDUNG

(11) **EP 1 273 943 A1**
(43) Veröffentlichungstag der Anmeldung: **08.01.2003**
(21) Anmeldenummer: 01810668.2
(22) Anmeldetag: 06.07.2001
(51) Int. Cl.: G02B 6/38

(54) **Buchsenteil für eine optische Steckverbindung**

(71) Anmelder: Diamond SA, 6616 Losone (CH)
(72) Erfinder: Volpi, Franco, 6652 Tegna (CH)
(74) Vertreter: Wenger, René

(57) **Zusammenfassung**

Eine Zentrierhülse (3) verfügt über einen ersten hülsenförmigen Zenterierabschnitt (5) zur Aufnahme eines ersten Steckerstifts und über einen zweiten hülsenförmigen Zentrierabschnitt (7) zur Aufnahme eines zweiten Steckerstifts. Die beiden Zentrierabschnitte bilden dabei je eine Aufnahme für Steckerstifte unterschiedlicher Durchmesser (D1 und D2). Der erste Zentrierabschnitt (5) weist einen Verbindungsansatz (8) auf, der an einem Verbindungsabschnitt (9) am zweiten Zentrierabschnitt (7) abgestützt und zentriert ist. Auf diese Weise dient jeweils der Aussenmantel jedes eingesteckten Steckerstifts als Referenzfläche für die Zentrierung.

## Beschreibung

Die Erfindung betrifft ein Buchsenteil für eine optische Steckverbindung gemäss dem Oberbegriff von Anspruch 1. Derartige Buchsenteile bilden in der Regel die Schnittstelle zwischen zwei optischen Steckern, wobei das Buchsenteil beispielsweise an einer Gerätewand oder dergleichen befestigt sein kann. Die Buchsenteile werden auch Mittelteile genannt, weil sie dazu bestimmt sind, von beiden Seiten her einen passenden Stecker aufzunehmen. Für die koaxiale Ausrichtung von Steckerstiften mit unterschiedlichem Durchmesser sind spezielle Massnahmen erforderlich, um trotz den erschwerten Bedingungen reproduzierbare Übertragungswerte zu erreichen.

Durch die GB-A-2 201 009 ist eine gattungsmässig vergleichbare optische Steckverbindung bekanntgeworden, bei welcher einer der Steckerstifte eine konische Schulter aufweist die an einem korrespondierenden Übergangsbereich innerhalb der Zentrierhülse anliegt und sich dadurch zentriert. Die Zentrizität zwischen den beiden Steckerstiften ist dabei weitgehend von dieser konischen Schulterpartie abhängig. Der Aussenmantel des Steckerstifts mit dem grösseren Durchmesser dient dabei nicht als Referenzfläche für die Zentrierung.

Durch die EP-A 1 083 449 ist ein Buchsenteil bekanntgeworden, bei dem in eine Zentrierhülse mit durchgehend gleichem Innendurchmesser eine Adapterhülse eingeschoben werden kann, welche die Aufnahme eines Steckerstifts mit kleinerem Aussendurchmesser gewährleistet. Die Adapterhülse ist dabei als Kugelbüchse ausgebildet, deren Kugeln sich am Aussenmantel des Steckerstifts bzw. am Innenmantel der Zentrierhülse abstützen. Auf diese Weise ist gewährleistet, dass der Aussenmantel jedes Steckerstifts als Referenzfläche für die Zentrierung dient. Die Adapterhülse eignet sich aber nur für solche Fälle von Steckverbindungen, bei denen alternativ die Möglichkeit einer Paarung gleicher oder unterschiedlicher Steckerstifte gewährleistet sein muss. Es ist daher eine Aufgabe der Erfindung, ein Buchsenteil der eingangs genannten Art zu schaffen, das in grossen Stückzahlen einfach herzustellen ist und bei dem der Aussenmantel der zu paarenden Stekkerstifte als Referenzfläche für die Zentrierung dient. Ausserdem soll auch bei unterschiedlichen Betriebsbedingungen ein reproduzierbarer, guter Übertragungswert bzw. eine geringe Übertragungsdämpfung erzielt werden. Diese Aufgabe wird erfindungsgemäss mit einem Buchsenteil gelöst, das die Merkmale im Anspruch 1 aufweist.

Die Unterteilung der ganzen Zentrierhülse in wenigstens zwei separate Bauteile erlaubt eine hochpräzise Fertigung. Die konzentrische bzw. koaxiale Verbindung der beiden Zentrierabschnitte ist dank des Verbindungsansatzes relativ einfach. Vorteilhaft weist der Verbindungsansatz dabei einen Aussenmantel auf, der am Innenmantel des zweiten Zentrierabschnitts abgestützt und zentriert ist. Der Aussenmantel wird dabei derart dimensioniert bzw. toleriert, dass er dem Aussendurchmesser des Steckerstifts entspricht, der in den zweiten Zentrierabschnitt eingeführt werden soll. Dies ist wichtig, um die Deformation des zweiten Zentrierabschnitts beim Steckvorgang zu minimieren. Andere Anschlag- und Verbindungsarten sind aber denkbar, beispielsweise eine Abstützung und Zentrierung am Aussenmantel oder auch an der Stirnseite des zweiten Zentrierabschnitts.

Die beiden Zentrierabschnitte sind vorteilhaft derart zusammengefügt, dass der Verbindungsansatz an einem Ende des ersten Zentrierabschnitts und dass der Verbindungsabschnitt an einem Ende des zweiten Zentrierabschnitts angeordnet ist. Denkbar wäre aber auch eine Anordnung, bei der sich die beiden Zentrierabschnitte wenigstens teilweise überlappen.

Der Verbindungsansatz ist vorzugsweise einstückig mit dem ersten Zentrierabschnitt als Flansch ausgebildet. In bestimmten Fällen könnte aber auch der Verbindungsansatz ein separates Bauteil sein. Ausserdem muss der Verbindungsansatz nicht zwingend als scheibenförmiger Flansch ausgebildet sein. Er könnte vielmehr auch nur ein paar sternförmig angeordnete Abstützpunkte aufweisen.

Um eine Koaxialität der beiden Zentrierabschnitte mit unterschiedlichem Durchmesser zu gewährleisten ist es vorteilhaft, wenn der Aussenmantel des Flansches koaxial verläuft mit dem Aussendurchmesser des übrigen ersten Zentrierabschnitts, vorzugsweise mit einer Achsabweichung von weniger als 1µm.

Zur Berücksichtigung der unterschiedlichen Innendurchmesser an den beiden Zentrierabschnitten und damit der unterschiedlichen mechanischen Eigenschaften kann es zweckmässig sein, dass die beiden Zentrierabschnitte unterschiedliche Wandstärken aufweisen.

Um sicherzustellen, dass die aufeinander zu zentrierenden Stekkerstifte von der Zentrierhülse spielfrei erfasst werden, ist es zweckmässig, wenn der erste Zentrierabschnitt und der zweite Zentrierabschnitt zur Erhöhung der Umfangselastizität je einen durchgehenden, in Längsrichtung verlaufenden Schlitz aufweisen, wobei die beiden Schlitze vorzugsweise aneinander anschliessen. Ersichtlicherweise erstreckt sich dabei der Schlitz auch durch den Verbindungsansatz. Auch eine radial versetzte Anordnung der Schlitze an den beiden Zentrierabschnitten wäre aber denkbar.

Die beiden Schlitze müssen nicht zwangsläufig achsparallel verlaufen. Auch ein Verlauf in einem bestimmten Winkel zur Mittelachse wäre denkbar. Vorteilhaft weisen die beiden Schlitze auch eine unterschiedliche Breite auf, um analog zur unterschiedlichen Wandstärke, den unterschiedlichen Materialeigenschaften Rechnung zu tragen.

Der Verbindungsansatz kann auf besonders einfache Weise mit dem zweiten Zentrierabschnitt verklebt sein. Klebverbindungen z.B. auf der Basis eines Epoxyklebers, werden bereits jetzt erfolgreich in der Optoelektronik eingesetzt und sie gewährleisten eine absolut sichere und saubere Verbindung. Je nach dem gewählten Werkstoff wären aber auch andere Verbindungstechniken wie z.B. Löten oder Schweissen denkbar.

Eine besonders hohe Präzision an der Zentrierhülse kann erreicht werden, wenn der erste und der zweite Zentrierabschnitt aus einem keramischen Werkstoff gefertigt sind. Keramische Sinterwerkstoffe werden bereits jetzt erfolgreich für die Herstellung von Steckerstiften und von konventionellen Zentrierhülsen eingesetzt. Denkbar wären aber auch andere Werkstoffe wie z.B. metallische Sinterwerkstoffe oder dergleichen. Auch eine Kombination unterschiedlicher Werkstoffe für den ersten und zweiten Zentrierabschnitt wäre nicht ausgeschlossen.

Die Zentrierhülse ist innerhalb eines Buchsengehäuses vorzugsweise schwimmend in einem Hülsenlager gelagert. Dadurch ist gewährleistet, dass die aufeinander zu zentrierenden Steckerstifte ohne Querspannungen gehalten werden.

Das Hülsenlager kann dabei zweiteilig ausgebildet sein, wobei ein erstes Hülsenlagerteil den ersten Zentrierabschnitt und ein zweites Hülsenlagerteil den zweiten Zentrierabschnitt aufnimmt.

Die Zentrierhülse kann so einerseits leicht montiert werden und andererseits kann die Konfiguration des Hülsenlagers vorteilhaft in unterschiedlichen Durchmessern an den beiden Zentrierabschnitten angepasst werden. Es wäre aber auch denkbar, das Hülsenlager einstückig auszubilden und die Zentrierhülse von einer Seite her einzuführen und beispielsweise mit Hilfe eines Sprengrings im Hülsenlager zu halten.

Auch das Buchsengehäuse kann grundsätzlich aus zwei Gehäuseteilen bestehen, wobei wenigstens eines der beiden Hülsenlagerteile einstückig mit einem der Gehäuseteile ausgebildet ist. Dabei kann eines der beiden Hülsenteile als separates Bauteil ausgebildet sein, das zwischen den zwei Gehäuseteilen gehalten ist. Damit wird die Montage insgesamt wesentlich vereinfacht.

Schliesslich kann es aus Sicherheitsgründen zweckmässig sein, wenn im Buchsengehäuse auf jeder Seite der Zentrierhülse eine Blende angeordnet ist, die beim Einstecken eines Steckerstifts in die Zentrierhülse aus einer Abblendstellung mit abgeblendeter Zentrierhülsenöffnung in eine Freigabestellung mit freiliegender Zentrierhülsenöffnung bewegbar ist. So kann verhindert werden, dass beispielsweise Laserlicht aus einem Buchsenteil mit nur einseitig eingestecktem Stecker austreten kann. Im Hinblick auf die unterschiedliche Konfiguration der in das Buchsenteil eingesteckten Stecker kann es zweckmässig sein, dass die beiden Blenden eine unterschiedliche Konfiguration und/oder Funktion aufweisen.

Weitere Vorteile und Einzelmerkmale der Erfindung ergeben sich aus der nachfolgenden Beschreibung von Ausführungsbeispielen und aus den Zeichnungen. Es zeigen:
- Figur 1: einen Querschnitt durch ein erfindungsgemässes Buchsenteil,
- Figur 2: einen Querschnitt durch die Zentrierhülse im Buchsenteil gemäss Figur 1 in vergrösserter Darstellung,
- Figur 3: eine Ansicht auf die Zentrierhülse gemäss Figur 2 aus Pfeilrichtung A,
- Figur 4: einen Querschnitt durch eine optische Steckverbindung mit einem Buchsenteil gemäss Figur 1,
- Figur 5: einen Querschnitt durch ein alternatives Ausführungsbeispiel einer Zentrierhülse, und
- Figur 6: eine stirnseitige Ansicht auf ein weiteres Ausführungsbeispiel einer Zentrierhülse.

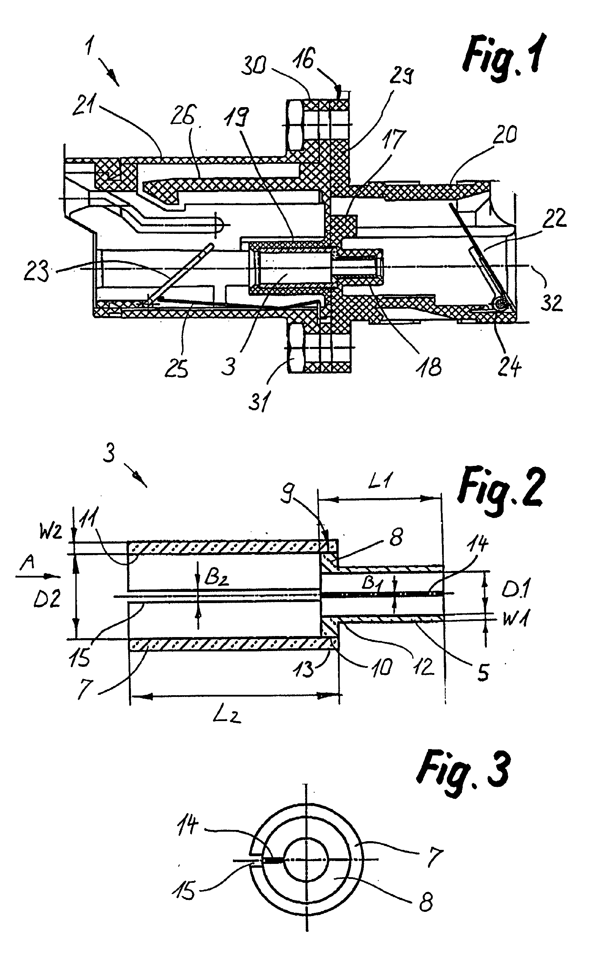

Wie in Figur 1 dargestellt, besteht ein allgemein mit 1 bezeichnetes Buchsenteil im wesentlichen aus einem Buchsengehäuse 16 innerhalb dem eine Zentrierhülse 3 gelagert ist. Das Buchsengehäuse besteht im vorliegenden Fall aus einem ersten Gehäuseteil 20 und einem zweiten Gehäuseteil 21. Die Zentrierhülse ist in einem Hülsenlager 17 schwimmend gelagert, das ebenfalls aus einem ersten Hülsenlagerteil 18 und einem zweiten Hülsenlagerteil 19 zusammengesetzt ist. Das erste Hülsenlagerteil 18 ist dabei einstückig mit dem ersten Gehäuseteil 20 ausgebildet. Dagegen bildet das zweite Hülsenlagerteil 19 ein separates Bauteil, das zwischen den beiden Gehäuseteilen 20 und 21 klemmend gehalten ist. Die Verbindung der Gehäuseteile erfolgt dabei an den beiden flanschartigen Ansätzen 29 und 30. Am flanschartigen Ansatz 30 sind Schraubenmuttern 31 eingelassen, so dass die ganze Anordnung beispielsweise an einer Gehäusewand fixiert und zusammengehalten werden kann.

Am zweiten Hülsenlagerteil 19 ist auch noch einstückig eine Sperrklinke 26 angeformt, welche der Verriegelung eines eingesteckten Steckers dient.

Auf jeder Seite der Zentrierhülse 3 ist je eine erste Blende 22 und eine zweite Blende 23 angeordnet. Diese Blenden sind als federnde Klappen ausgebildet, welche einerseits die Zentrierhülsenöffnung auf der optischen Mittelachse 32 abblenden, welche aber auch ganz oder teilweise die eigentliche Einstecköffnung am Buchsengehäuse 16 verschliessen können. Beim Ausführungsbeispiel wird die erste Blende 22 mittels einer auf ihrer Schwenkachse sitzenden Schraubendrehfeder 24 in die Abblendstellung vorgespannt. Bei der zweiten Blende 23 übernimmt diese Funktion eine Blattfeder 25, die zwischen dem zweiten Gehäuseteil 21 und dem zweiten Hülsenlagerteil 19 eingespannt ist. Die unterschiedliche Konfiguration und Funktion der beiden Blenden hängt mit den unterschiedlichen Steckertypen zusammen, welche die beide Gehäuseteile 20 und 21 aufnehmen müssen. Die im Hülsenlager 17 schwimmend gelagerte Zentrierhülse 3 ist in Figur 2 genauer dargestellt. Sie besteht aus einem ersten, hülsenförmigen zentrierabschnitt 5 und aus einem zweiten, hülsenförmigen Zentrierabschnitt 7. Diese beiden Zentrierabschnitte bilden je einen etwa hohlzylindrischen Aufnahmeraum mit einem Innendurchmesser D1 am ersten Zentrierabschnitt 5 bzw. mit einem Innendurchmesser D2 am zweiten Zentrierabschnitt 7. Am einen Ende 12 des ersten Zentrierabschnitts 5 ist einstückig ein Verbindungsansatz 8 in der Form eines Flansches angeordnet. Dieser Flansch verfügt über einen hochpräzise zylindrischen, beispielsweise geläppten Aussenmantel 10, der exakt mit dem ebenfalls mit einer Toleranz von ca. 1 µm präzise bearbeiteten Innenmantel 11 des zweiten Zentrierabschnitts 7 zentriert ist und zwar im Bereich eines Verbindungsabschnitts 9, der an einem Ende 13 des zweiten Zentrierabschnitts 7 angeordnet ist.

Der erste Zentrierabschnitt 5 hat eine Wandstärke W1, welche kleiner ist als die Wandstärke W2 des zweiten Zentrierabschnitts 7. Jeder Zentrierabschnitt ist mit einem Schlitz 14 bzw. 15 versehen, wobei die Breite B1 des Schlitzes 14 am ersten Zentrierabschnitt kleiner ist als die Breite B2 des Schlitzes 15 am zweiten Zentrierabschnitt. Schliesslich ist auch die Länge L1 des ersten Zentrierabschnitts 5 kleiner als die Länge L2 des zweiten Zentrierabschnitts. Die Gesamtlänge der Zentrierhülse 3 kann beispielsweise 9 mm betragen. Bei einer Paarung von gängigen Steckertypen kann D1 1,25 mm und D2 2,5 mm betragen.

Aus Figur 3 ist ersichtlich, dass die beiden Schlitze 14 und 15 auf der gleichen Ebene liegen und dass sich der Schlitz 14 auch durch den flanschartigen Verbindungsansatz 8 erstreckt. Damit ist gewährleistet, dass sich beide Zentrierabschnitte trotz unterschiedlichem Durchmesser D1 und D2 spielfrei um die jeweiligen Steckerstifte schliessen.

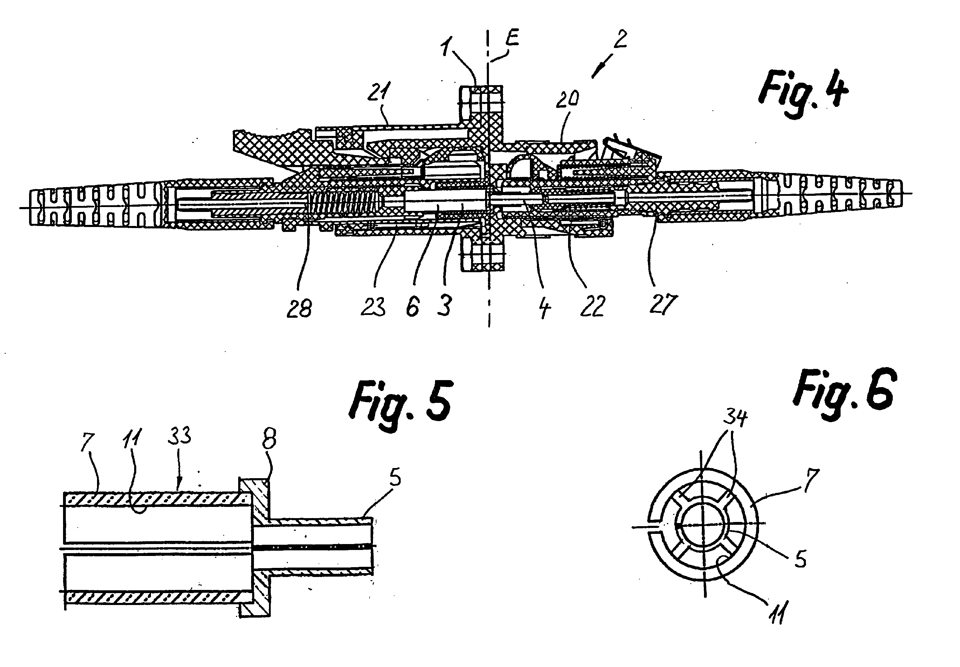

Figur 4 zeigt eine optische Steckverbindung 2, die mit Hilfe eines Buchsenteils 1 gemäss Figur 1 hergestellt werden kann. Dabei wird ein erster Steckerstift 4 eines ersten Steckers 27 in der Zentrierhülse 3 stirnseitig mit einem zweiten Steckerstift 6 eines zweiten Steckers 28 gepaart. Die eigentlichen Lichtwellenleiter sind zentrisch in den jeweiligen Steckerstiften gehalten, wobei deren möglichst exakte Positionierung eine dämpfungsfreie Lichtübertragung ermöglicht. Beim ersten Stecker 27 kann es sich beispielsweise um einen Steckertyp handeln, wie er beispielsweise durch die EP-A 1 072 918 bekanntgeworden ist. Beim zweiten Stecker 28 kann es sich um einen Steckertyp handeln, wie er beispielsweise durch die EP-A 616 236 bekanntgeworden ist. Die Berührungsebene E der beiden Steckerstifte 4 und 6 bildet gleichzeitig die Trennebene zwischen den beiden Gehäuseteilen 20 und 21. Beide Stecker 27 und 28 sind im Buchsenteil 1 im vollständig eingesteckten Zustand auf hier nicht näher beschriebene Art lösbar verriegelt. Aus Figur 4 ist auch ersichtlich, dass die beiden Blenden 22 und 23 in eine Freigabestellung umgeklappt sind, die etwa parallel zu den Steckerstiften verläuft.

Beim Ausführungsbeispiel gemäss Figur 5 ist der flanschartige Verbindungsansatz 8 nicht am Innenmantel 11, sondern am Aussenmantel 33 des zweiten Zentrierabschnitts 7 zentriert. Dies erfordert allerdings eine exakte Konzentrizität zwischen Innenmantel 11 und Aussenmantel 33.

Eine weitere Alternative einer Zentrierhülse ist in Figur 6 dargestellt. Der Verbindungsansatz besteht hier nicht aus einem scheibenartigen Flansch, sondern aus insgesamt 4 Abstütznasen 34, die am Innenmantel 11 des zweiten Zentrierabschnitts 7 abgestützt sind. Selbstverständlich sind alternative Ausgestaltungen möglich, ohne dass dabei der Gegenstand der Erfindung verlassen wird. Der Verbindungsansatz muss sich auch nicht zwingend an einem Zentrierabschnitt nach Aussen erstrecken. Falls der erste Zentrierabschnitt einen grösseren Innendurchmesser aufweist als der zweite Zentrierabschnitt, könnte sich der Verbindungsansatz auch nach Innen erstrecken und sich am Aussenmantel oder am Innenmantel des zweiten Zentrierabschnitts mit kleinerem Innendurchmesser abstützen.

## Patentansprüche

1. Buchsenteil (1) für eine optische Steckverbindung (2) mit wenigstens einer Zentrierhülse (3) zur koaxialen Aufnahme eines ersten Steckerstifts (4) in einem ersten hülsenförmigen Zentrierabschnitt (5) und eines zweiten Steckerstifts (6) in einem sich an den ersten Zentrierabschnitt anschliessenden zweiten hülsenförmigen Zentrierabschnitt (7), wobei die beiden Zentrierabschnitte (5, 7) je eine Aufnahme für Steckerstifte unterschiedlicher Durchmesser bilden, **dadurch gekennzeichnet, dass** der erste Zentrierabschnitt (5) einen Verbindungsansatz (8) aufweist, der an einem Verbindungsabschnitt (9) am zweiten Zentrierabschnitt (7) abgestützt und zentriert ist.

2. Buchsenteil nach Anspruch 1, **dadurch gekennzeichnet, dass** der Verbindungsansatz (8) einen Aussenmantel (10) aufweist, der am Innenmantel (11) des zweiten Zentrierabschnitts (7) abgestützt und zentriert ist.

3. Buchsenteil nach Anspruch 1 oder 2, **dadurch gekennzeichnet, dass** der Verbindungsansatz (8) an einem Ende (12) des ersten Zentrierabschnitts (5) und dass der Verbindungsabschnitt (9) an einem Ende (13) des zweiten Zentrierabschnitts (7) angeordnet ist.

4. Buchsenteil nach einem der Ansprüche 1 bis 3, **dadurch gekennzeichnet, dass** der Verbindungsansatz (8) einstückig mit dem ersten Zentrierabschnitt (5) als Flansch ausgebildet ist.

5. Buchsenteil nach Anspruch 4, **dadurch gekennzeichnet, dass** der Aussenmantel (10) des Flansches koaxial verläuft zum Aussenmantel des übrigen ersten Zentrierabschnitts, vorzugsweise mit einer Achsabweichung von weniger als 1µm.

6. Buchsenteil nach einem der Ansprüche 1 bis 5, **dadurch gekennzeichnet, dass** die beiden Zentrierabschnitte (5, 7) unterschiedliche Wandstärken aufweisen.

7. Buchsenteil nach einem der Ansprüche 1 bis 6, **dadurch gekennzeichnet, dass** der erste Zentrierabschnitt (5) und der zweite Zentrierabschnitt (7) zur Erhöhung der Umfangselastizität je einen durchgehenden, in Längsrichtung verlaufenden Schlitz (14, 15) aufweisen, wobei die beiden Schlitze vorzugsweise aneinander anschliessen.

8. Buchsenteil nach Anspruch 7, **dadurch gekennzeichnet, dass** die Schlitze (14, 15) eine unterschiedliche Breite aufweisen.

9. Buchsenteil nach einem der Ansprüche 1 bis 8, **dadurch gekennzeichnet, dass** der Verbindungsansatz (8) mit dem zweiten Zentrierabschnitt (7) verklebt ist.

10. Buchsenteil nach einem der Ansprüche 1 bis 9, **dadurch gekennzeichnet, dass** der erste und der zweite Zentrierabschnitt aus einem keramischen Werkstoff gefertigt sind.

11. Buchsenteil nach einem der Ansprüche 1 bis 10, **dadurch gekennzeichnet, dass** die Zentrierhülse (3) innerhalb eines Buchsengehäuses (16) vorzugsweise schwimmend in einem Hülsenlager (17) gelagert ist.

12. Buchsenteil nach Anspruch 11, **dadurch gekennzeichnet, dass** das Hülsenlager (17) zweiteilig ausgebildet ist und dass ein erstes Hülsenlagerteil (18) den ersten Zentrierabschnitt (5) und ein zweites Hülsenlagerteil (19) den zweiten Zentrierabschnitt (7) aufnimmt.

13. Buchsenteil nach Anspruch 12, **dadurch gekennzeichnet, dass** das Buchsengehäuse (16) aus zwei Gehäuseteilen (20, 21) besteht und dass wenigstens eines der beiden Hülsenlagerteile einstückig mit einem der Gehäuseteile ausgebildet ist.

14. Buchsenteil nach Anspruch 13, **dadurch gekennzeichnet, dass** eines der beiden Hülsenlagerteile als separates Bauteil ausgebildet ist, das zwischen den zwei Gehäuseteilen gehalten ist.

15. Buchsenteil nach einem der Ansprüche 11 bis 14, **dadurch gekennzeichnet, dass** im Buchsengehäuse (16) auf jeder Seite der Zentrierhülse (3) eine Blende (22, 23) angeordnet ist, die beim Einstecken eines Steckerstifts in die Zentrierhülse aus einer Abblendstellung mit abgeblendeter Zentrierhülsenöffnung in eine Freigabestellung mit freiliegender Zentrierhülsenöffnung bewegbar ist.
